# DEMANDE DE BREVET EUROPEEN

(11) **EP 1 256 911 A1**
(43) Date de publication de la demande: **13.11.2002**
(21) Numéro de dépôt: 02364021.2
(22) Date de dépôt: 03.05.2002
(51) Int. Cl.: G07F 7/08, G07F 19/00, G06F 17/60

(54) **Procédé de sécurisation d'un paiement d'un client à un commerçant, centre de localisation et système correspondants**

(30) Priorité: 07.05.2001 FR 0106093
(71) Demandeur: Cegetel, 92915 Paris La Défense (FR)
(72) Inventeur: Marsot, Rodolphe, 38000 Grenoble (FR)
(74) Mandataire: Vidon, Patrice

(57) **Abrégé**

L'invention concerne un procédé de sécurisation d'un paiement d'un client à un commerçant, comprenant une étape de transmission vers un centre de gestion, selon un premier protocole prédéfini, d'une requête de paiement comprenant au moins un identifiant dudit client.

Selon l'invention, un tel procédé comprend une étape de validation selon laquelle :
- ledit centre de gestion génère une requête de validation, à l'attention dudit client, selon un second protocole indépendant dudit premier protocole, à une adresse spécifiée par ledit client ;
- on effectue une transmission au nom dudit client d'un message de validation ou de refus du paiement, selon ledit second protocole.

## Description

Le domaine de l'invention est celui du paiement d'un bien et/ou d'un service acquis par un client. Plus précisément, l'invention concerne la sécurisation d'un paiement d'un client à un commerçant, notamment si un tel paiement est effectué par carte bancaire, ou en produisant un numéro de carte bancaire (par exemple via Internet, par téléphone ou télécopie).

Depuis l'apparition des cartes de paiement (cartes bancaires), de nombreux efforts ont été réalisés pour sécuriser les transactions bancaires. Ces efforts se sont encore intensifiés depuis l'apparition des réseaux de communication modernes, tel que les réseaux de type internet, et notamment depuis qu'il est possible d'effectuer des achats, et les règlements correspondants par leur intermédiaire.

En effet, il suffit à ce jour de connaître le numéro de carte bancaire d'un tiers pour pouvoir réaliser des transactions en son nom, et débiter ainsi frauduleusement son compte en banque.

Or, il est très facile de se procurer un tel numéro, qui est parfois transmis à la demande de commerçants ou de fournisseurs de services. Par exemple, lorsque un client souhaite réserver une chambre d'hôtel, il est fréquent que l'hôtelier lui demande son numéro de carte bancaire, à titre de confirmation de réservation. De même, certains sites du réseau mondial Internet de commerce électronique demandent à leurs clients leur numéro de carte bancaire, et les stockent, par exemple en vue d'une réutilisation ultérieure.

Il n'existe à ce jour aucune solution permettant de détecter l'utilisation frauduleuse, par un tiers, d'un numéro de carte bancaire ne lui appartenant pas, et il n'existe, a fortiori, aucune solution permettant de bloquer une telle transaction.

L'invention a notamment pour objectif de supprimer ces inconvénients de l'art antérieur.

Plus précisément, un objectif de l'invention est, afin d'autoriser une protection efficace du titulaire d'une carte bancaire, de fournir une technique de sécurisation d'une transaction, permettant notamment d'empêcher l'utilisation frauduleuse par un tiers d'un numéro de carte bancaire.

Un autre objectif important de l'invention est de mettre en oeuvre une technique de sécurisation d'une transaction qui soit indépendante du mécanisme de la transaction elle-même.

L'invention a également pour objectif de permettre à une société tierce, par exemple un opérateur de télécommunication, de proposer et de mettre en oeuvre un service de sécurisation des transactions bancaires pour le compte d'utilisateurs finaux.

L'invention a encore pour objectif de mettre en oeuvre une technique de sécurisation d'une transaction qui soit simple et peu coûteuse à mettre en oeuvre.

Ces objectifs, ainsi que d'autres qui apparaîtront par la suite, sont atteints à l'aide d'un procédé de sécurisation d'un paiement d'un client à un commerçant, comprenant une étape de transmission vers un centre de gestion, selon un premier protocole prédéfini, d'une requête de paiement comprenant au moins un identifiant dudit client.

Selon l'invention, un tel procédé comprend une étape de validation selon laquelle :
- ledit centre de gestion génère une requête de validation, à l'attention dudit client, selon un second protocole indépendant dudit premier protocole, à une adresse spécifiée par ledit client ;
- on effectue une transmission au nom dudit client d'un message de validation ou de refus du paiement, selon ledit second protocole.

Ainsi, l'invention repose sur une approche tout à fait nouvelle et inventive de la sécurisation d'un paiement d'un client à un commerçant. En effet, l'invention propose un mécanisme de confirmation, par le client, d'une transaction bancaire, qui est indépendant du mécanisme de paiement de la transaction elle-même. Notamment, un tel mécanisme de confirmation fait intervenir une adresse spécifiée par le client, rendant ainsi impossible toute transaction frauduleuse par un tiers qui ne détiendrait que le numéro de carte bancaire de ce client, sans connaître ou sans pouvoir accéder à l'adresse spécifiée par ce dernier.

Selon un mode de réalisation préféré de l'invention, ledit client est équipé d'un terminal comprenant des moyens de radio-communication.

De manière préférentielle, ledit second protocole est le protocole SIP.

Préférentiellement, ladite requête de validation est générée sous la forme d'un message "INVITE".

Avantageusement, un tel procédé comprend les étapes suivantes :
(a) réception, par ledit centre de gestion, d'une requête de paiement émise par ledit commerçant ;
(b) transmission d'une requête de validation, dudit centre de gestion vers un serveur de localisation ;
(c) identification d'un serveur proxy, auprès duquel ledit client est enregistré, par ledit serveur de localisation ;
(d) transmission de ladite requête de validation vers ledit serveur proxy ;
(e) transmission par ledit serveur proxy de ladite réponse audit centre de gestion.

Ainsi, le client peut par exemple confier au serveur proxy un script, de manière à le pré-programmer. C'est au serveur proxy que revient alors la charge de répondre, au nom du client, en fonction de critères prédéfinis, à la requête de validation émise par le centre de gestion. La validation de la transaction est alors faite de façon implicite, par pré-programmation du serveur proxy.

Selon une variante avantageuse de l'invention, un tel procédé comprend en outre, au moins dans certaines situations, à l'issue de ladite étape de transmission de ladite requête de validation vers ledit serveur proxy, les étapes suivantes :
(d_{bis}) transmission par ledit serveur proxy de ladite requête de validation vers ledit client équipé d'un terminal ;
(dₜₑᵣ) transmission par ledit client équipé d'un terminal d'une réponse à ladite requête de validation, vers ledit serveur proxy ; de façon que ledit serveur proxy transmette ladite réponse audit centre de gestion.

La validation de la transaction est alors effectuée de façon explicite par le client, et met en oeuvre un terminal détenu par ce dernier, auquel le serveur proxy transmet la requête de validation. Les étapes d_{bis} et dₜₑᵣ sont optionnelles pour l'invention, et ne sont mises en oeuvre que lorsque le serveur proxy n'a pas été préprogrammé selon les critères définis par le client, ou dans certaines conditions programmées par le client.

Selon une caractéristique avantageuse de l'invention, lorsque le client est équipé d'un terminal, lesdites étapes (e) et (f) mettent en oeuvre une transmission utilisant au moins une des techniques appartenant au groupe comprenant :
- les messages courts (SMS) ;
- les communications téléphoniques ;
- les messages électroniques.

Selon une technique avantageuse de l'invention, ledit centre de gestion et/ou ledit serveur proxy met en oeuvre une procédure de requête de validation uniquement dans des cas particuliers prédéterminés.

On peut ainsi envisager qu'à la demande du client, le centre de gestion ne demande de confirmation que pour les transactions de montant supérieur à un seuil prédéterminé, fixé par le client. On peut aussi envisager que le centre de gestion émette systématiquement une requête de validation vers le serveur proxy, mais que ce dernier ne transmette cette requête vers un terminal détenu par le client que si la transaction vérifie un certain nombre de critères définis par le client.

Préférentiellement, lesdits cas particuliers sont fonction d'au moins un des paramètres suivants :
- montant de la transaction ;
- type de client ;
- type de commerçant ;
- type de serveur proxy.

Ainsi, le client peut indiquer au serveur proxy, sous la forme d'un script par exemple, qu'il ne souhaite recevoir de requête de validation, sur un terminal qu'il détient, que pour les transactions émanant d'une liste de commerçants prédéterminée, et/ou excédant un montant prédéfini. Le script peut bien sûr également définir d'autres critères que doit vérifier la transaction pour que soit mise en oeuvre une requête de validation.

Avantageusement, au moins un des paramètres desdits cas prédéterminés sont configurables par au moins un des intervenants suivants :
- le client ;
- le commerçant ;
- le centre de gestion ;
- le serveur proxy.

De manière préférentielle, une réponse à une requête de validation peut-être de trois types :
- réponse positive ;
- réponse négative ;
- absence de réponse.

Selon une caractéristique préférée de l'invention, une absence de réponse est interprétée par ledit serveur proxy et/ou par ledit centre de gestion comme une réponse négative.

En effet, une absence de réponse de la part du client ou du serveur proxy à une requête de validation émise par le centre de gestion peut être due à une erreur survenue au cours de la transmission de la requête et/ou de la réponse elle-même. En interprétant l'absence de réponse comme une réponse négative, on accroît ainsi la sécurisation de la transaction, en garantissant au client que le paiement n'est pas accepté contre sa volonté.

Avantageusement, ledit centre de gestion n'effectue l'ensemble du traitement bancaire relatif audit paiement qu'après réception d'une réponse positive à ladite requête de validation.

Il n'est en effet pas utile que le centre de gestion consomme des ressources pour effectuer le traitement bancaire, si le client et/ou le serveur proxy refuse(nt) la transaction. On peut bien sûr également envisager de mettre en oeuvre une variante de l'invention plus consommatrice en termes de ressources, dans laquelle le centre de gestion effectue le traitement bancaire relatif au paiement, avant réception d'une réponse à la requête de validation.

Ledit paiement est préférentiellement effectué à l'aide d'une carte bancaire.

L'invention concerne également un centre de localisation d'au moins un client, mettant en oeuvre le procédé décrit précédemment.

Un tel centre de localisation est par exemple géré par un opérateur de télécommunication, qui met en oeuvre un protocole SIP au cours d'une étape de localisation d'un serveur proxy spécifié par un client.

L'invention concerne encore un système de sécurisation de paiements entre une pluralité de clients et une pluralité de commerçants, mettant en oeuvre un serveur de localisation, capable de recevoir des requêtes de validation d'au moins un centre de gestion auprès duquel un paiement a été requis, de transmettre lesdites requêtes de validation vers des terminaux détenus respectivement par chacun desdits clients, et de recevoir et de faire suivre une réponse à ladite requête de validation, émise par ledit client à l'aide de son terminal.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique des différentes étapes mises en oeuvre au cours du procédé de sécurisation de paiement selon l'invention ;
- la figure 2 illustre un premier mode de réalisation des étapes 10 et 11 de la figure 1 ;
- la figure 3 décrit un second mode de réalisation des étapes 10 et 11 de la figure 1, qui constitue une variante du mécanisme de la figure 2 ;
- la figure 4 présente un exemple de mode de réalisation des étapes 12 et 13 de la figure 1.

Le principe général de l'invention repose sur la mise en oeuvre d'un mécanisme de confirmation d'une transaction, indépendant du mécanisme de gestion de la transaction elle-même, faisant intervenir un terminal détenu par le client.

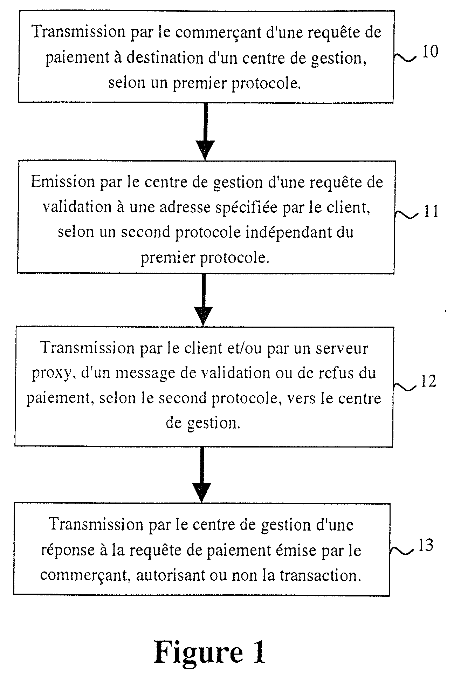

On présente, en relation avec la figure 1, un mode de réalisation du procédé de sécurisation de paiement de l'invention.

A titre d'exemple, on décrit la mise en oeuvre de l'invention dans le cadre d'un achat effectué par un client par carte bancaire chez un commerçant, et pour lequel la confirmation de paiement s'effectue à l'aide d'un téléphone de radiocommunication mobile du client.

L'invention s'applique bien sûr également à tout autre type d'achat, tel que par exemple un achat réalisé par le client sur un site d'un réseau de type internet, ou encore un achat par correspondance. Le mécanisme de confirmation de paiement proposé par l'invention peut aussi utiliser tout autre type de terminal détenu par le client, tel que, par exemple, un téléphone fixe, un ordinateur portable, un PDA (en anglais "Personal Digital Assistant"), etc.

Un client souhaite par exemple faire l'acquisition d'un bien chez un commerçant, et règle son achat par carte bancaire. Le commerçant insère alors la carte bancaire du client dans un lecteur approprié. Une phase d'authentification du client, au cours de laquelle on lui demande par exemple de taper un code secret (le code confidentiel de sa carte bancaire) est alors classiquement mise en oeuvre. Dans le cas d'un achat sur le réseau mondial Internet, la phase d'authentification du client fait généralement intervenir un mot de passe au lieu du code PIN (en anglais "Personal Identification Number") du client.

Au cours d'une étape référencée 10, le commerçant communique alors avec un centre de gestion (la banque du client, ou un organisme du type "GIE carte bancaire" -marque déposée- par exemple) pour lui transmettre une demande d'autorisation de paiement.

Selon les techniques connues de l'art antérieur, le centre de gestion renvoie alors un code de confirmation au commerçant si la carte bancaire du client est valide, et si son compte bancaire est provisionné. Le commerçant autorise alors l'achat du client, ce qui met fin à la transaction. Un tiers mal intentionné peut donc avoir utilisé la carte ou le numéro de compte du client, contre la volonté de ce dernier.

Selon l'invention en revanche, le centre de gestion émet en outre, au cours d'une étape référencée 11, une requête de validation destinée par exemple à un terminal détenu par le client. Une telle requête peut aussi être adressée, au cours de l'étape référencée 11, à un serveur proxy, à une adresse spécifiée par le client. Selon un mode de réalisation préféré de l'invention, l'étape référencée 11 est mise en oeuvre avant que le centre de gestion ne vérifie la validité de la carte bancaire du client et l'état de son compte bancaire. Une telle étape 11 peut bien sûr également être mise en oeuvre après que le centre de gestion a procédé à ces vérifications (en tout ou partie).

Par exemple, au cours de l'étape référencée 11, la banque du client compose une requête selon un protocole de type SIP, destinée à une application représentant le client. Une telle requête est reçue par le client sur son téléphone mobile, et/ou est traitée par un serveur proxy à qui le client a confié la charge de traiter et de répondre à la requête émise par la banque.

Selon une variante préférée de l'invention, au cours de l'étape référencée 11, la requête émise par la banque est dirigée vers un serveur proxy, tel que défini par le serveur SIP de localisation. Ainsi, même lorsque le client n'est pas joignable, une décision peut être prise par défaut par le serveur proxy. Un autre avantage de l'envoi de la requête vers un serveur proxy, et non directement vers un terminal détenu par le client, est qu'on peut ainsi confier à une société tierce la responsabilité de contacter le client et de le joindre pour confirmation (par exemple par un simple appel téléphonique, par un SMS, ou par tout autre moyen choisi par le client pour être joint dans un tel cas).

On rappelle ci-dessous les caractéristiques du protocole SIP, qui est mis en oeuvre dans un mode de réalisation préférentiel de l'invention. SIP est l'acronyme de « Session Initiation Protocol » (ou « Protocole d'Initialisation de Session » en français), qui est une norme de l'IETF (ou « Internet Engineering Task Force », organisme chargé de l'élaboration des normes RFC ou « Request For Comments ») décrite dans le document référencé RFC 2543. SIP est un protocole destiné à gérer (c'est-à-dire notamment à établir, modifier et mettre fin à) des sessions de communication entre une ou plusieurs parties.

Un protocole SIP permet, entre autres, une phase de négociation de session. Lors de l'établissement d'une session, un dialogue s'établit entre les terminaux utilisateurs afin de déterminer le meilleur mode de communication. La session dure ensuite pendant toute la connexion.

Plus précisément, selon le protocole SIP, un appelant peut envoyer un message d'invitation, INVITE, à l'adresse du destinataire. A la réception de ce message, l'appelé peut accepter, refuser ou transférer la communication. En cas d'acceptation, l'appelé renvoie un message de réponse positif stipulant le ou les médias à utiliser pour le joindre lors de cette session, avec les adresses et/ou les numéros correspondants.

Lors du message d'INVITE, ou des messages suivants, des informations usager (comme c'est le cas pour le réseau numérique à intégration de services RNIS) peuvent inclure des informations additionnelles (par exemple, une URL (en anglais "Uniform Resource Locator"), une page Web ou une demande de rendez-vous).

Selon une première variante de l'invention, en réponse à la requête de validation émise par le centre de gestion, le client transmet (12) à ce dernier un message de validation ou de refus du paiement, selon le même protocole que celui utilisé au cours de l'étape 11 précédente, via son téléphone mobile. Un laps de temps prédéterminé peut être prévu pour cette opération.

Selon une deuxième variante de l'invention, la requête de validation peut être traitée de manière implicite, par le serveur proxy, sans intervention du client. La méthode implicite de validation de la transaction utilisée par le serveur proxy peut alors mettre en oeuvre
- un profil client prédéfini : le serveur proxy adapte alors le traitement de la transaction en fonction du profil du client. Par exemple, le serveur proxy transmet systématiquement la requête de validation aux nouveaux clients, vers un terminal qu'ils détiennent. Le serveur proxy peut aussi refuser le paiement de toutes les transactions pour les clients à découvert, signalés par le centre de gestion ;
- un script générique : le serveur proxy adapte alors le traitement de la transaction en fonction des paramètres de cette dernière. Par exemple, on définit un montant de transaction maximum par jour, ou par commerçant, et quand ce montant est atteint, le serveur proxy refuse systématiquement de valider la transaction ;
- un script personnalisé par le client : le client spécifie alors au serveur proxy les critères que la transaction doit vérifier pour que son paiement soit ou non accepté.

En fonction du message émis (11) par le client, et éventuellement du résultat de la vérification de la validité de sa carte bancaire et de l'état de son compte mentionnée précédemment, le centre de gestion transmet (13) au commerçant une réponse à la requête de paiement émise par ce dernier, de façon à autoriser ou interdire la transaction. Une telle étape 13 met en oeuvre un protocole classique, identique à celui mis en oeuvre au cours de l'étape initiale 10, mais différent du protocole (par exemple le protocole SIP) utilisé pour les étapes intermédiaires 11 et 12.

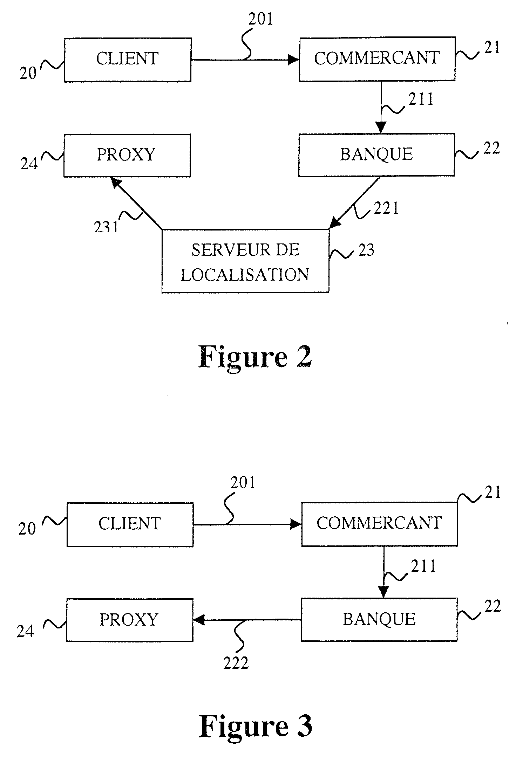

On présente désormais, en relation avec la figure 2, une première variante de réalisation détaillée des étapes 10 et 11 de la figure 1.

Au cours de l'étape référencée 201, le client 20 signifie son achat au commerçant 21. Une telle étape 201 peut être mise en oeuvre par l'intermédiaire d'un lecteur de carte bancaire, ou en laissant ses coordonnées bancaires sur un réseau de type internet, ou en passant commande à un commerçant 21 (ou un site) qui connaît déjà les coordonnées bancaires du client 20.

Le commerçant 21 envoie alors (211) une requête de paiement à la banque 22 du client 20. Une telle requête consiste donc en une demande d'autorisation de paiement, et peut véhiculer également une requête d'authentification du client 20. Elle comprend par exemple le numéro et la date d'expiration de la carte bancaire du client 20, le montant de l'achat, une donnée d'identification du commerçant 21, et le nom du client 20.

La banque 22 compose alors (221) une requête de type SIP destinée à une application représentant le client 20. Cette requête est composée à partir des informations reçues du commerçant 21 au cours de l'étape référencée 211, et est par exemple adressée à une adresse de type SIP de structure numérodelacarte@CB.com, par exemple 123245678888@Gie-carte-bancaire.com. Si la banque 22 met en oeuvre un protocole de type SIP au cours de l'étape référencée 221, la requête de validation sera émise sous la forme d'un message de type INVITE. Les données supplémentaires sont alors incluses dans le champ réservé aux données utilisateur dans un message MIME (en anglais "Multipurpose Internet Mail Extension").

Le serveur de localisation 23 (par exemple le serveur de localisation du "Gie-carte-bancaire") reçoit la requête de validation de la banque 22, et la redirige alors vers un serveur d'application 24, de type proxy, dans lequel le client 20 a choisi de faire exécuter sa logique de service de confirmation. La requête de validation peut par exemple être envoyée à une adresse du type client@vizzavi.com (marque déposée).

Dans le cas de l'utilisation d'un protocole de type SIP pour la requête de validation, le proxy 24 est le serveur sur lequel le client 20 s'est enregistré.

La figure 3 illustre une deuxième variante de réalisation détaillée des étapes 10 et 11 de la figure 1, qui diffère de la variante présentée en relation avec la figure 2 en ce que la requête de validation est émise (222) par la banque 22 directement vers le proxy 24, sans passer par un serveur de localisation 23.

Au cours des étapes référencées 231 et 222, l'adresse initiale de type numérodelacarte@CB.com à laquelle est adressée la requête de validation de la banque peut avoir été changée en une adresse associée au client (par exemple Jean.Dupont@cegetel.fr) (marque déposée). Dans la variante illustrée en figure 3, une telle adresse est par exemple associée au numéro de la carte bancaire du client dans une base de données client de la banque. Le message conserve les mêmes données utilisatrices.

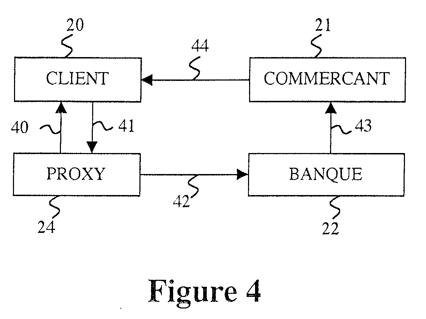

On présente désormais en relation avec la figure 4 la phase de traitement associée aux étapes 12 et 13 de la figure 1.

Le proxy 24 envoie (40) au client 20 une demande de confirmation générée à partir de la requête de validation émise par la banque 22. Une telle demande de confirmation peut être par exemple transmise sous la forme d'un message court de type SMS, d'un appel téléphonique, ou d'un appel destiné à l'ordinateur du client 20. On peut par exemple envisager d'émettre une demande de confirmation sous la forme d'un message SIP, WAP push, ou Instant Messaging (pour messagerie instantanée).

Selon un mode de réalisation préférentiel de l'invention, le client 20 reçoit la demande de confirmation sur son téléphone mobile.

Le client 20 envoie (41) au proxy 24 une réponse, qui peut autoriser ou non la transaction considérée. On peut aussi imaginer que le client 20 ne réponde pas au proxy 24, une telle absence de réponse étant interprétée au delà d'une durée maximale prédéterminée comme une réponse négative par le proxy 24.

Le proxy 24 transmet alors (42) la réponse du client 20 à la banque 22, par exemple sous la forme d'un message de type INVITE indiquant l'autorisation ou le refus par le client de la transaction, ainsi qu'un identifiant de ce dernier.

A la réception d'une réponse positive, la banque 22 met en oeuvre un traitement bancaire classique de la transaction. Notamment, la banque 22 peut vérifier que le compte bancaire du client 22 est bien provisionné. En fonction des résultats de ce traitement bancaire, la banque 22 envoie (43) au commerçant 21 un message autorisant ou non la transaction, selon un protocole classique du type de celui utilisé pour l'émission (211) de la requête de paiement.

A la réception d'une réponse négative en revanche, la banque 22 envoie (43) directement au commerçant 21 une réponse négative à la requête de paiement émise par le commerçant au cours de l'étape référencée 211, selon un protocole identique à celui utilisé pour cette requête.

Une telle réponse de la banque 22 s'affiche par exemple sur le lecteur de carte bancaire du commerçant 21.

La réponse 43 de la banque peut être accompagnée d'une démarche d'authentification, permettant par exemple au commerçant 21 de vérifier que le message qu'il reçoit émane bien d'un organisme habilité à délivrer ou non une autorisation de paiement. L'authentification par le commerçant 21 de l'organisme acceptant la transaction n'est pas spécifique à l'invention, mais est généralement incluse dans le mécanisme classique de validation des transactions bancaires.

Le commerçant 21 peut alors autoriser ou refuser (44) au client 20 la transaction en cours, en fonction de la réponse reçue de la banque 22.

On a ici décrit un mode de réalisation de l'invention dans lequel le mécanisme de confirmation proposé est systématiquement mis en oeuvre, pour toutes les transactions effectuées par le client 20.

On peut bien sûr imaginer des variantes de réalisation, selon lesquelles une logique par défaut est appliquée à l'invention. On peut ainsi envisager que la banque 22 ou le proxy 24 tiennent à jour des tables de configuration, dans lesquelles sont répertoriées les profils des clients 20, indiquant par exemple pour chacun d'eux le montant minimum de la transaction à partir duquel le mécanisme de confirmation de l'invention doit être mis en oeuvre. Ces tables peuvent aussi stocker l'identité de certains commerçants, ou certaines zones géographiques de transactions, ou encore certains types de transactions (par exemple les transactions effectuées via le réseau mondial Internet) pour lesquels le client 20 souhaite que le mécanisme de confirmation de l'invention soit mis en oeuvre.

Ainsi, un client 20 peut indiquer à la banque 22 qu'il souhaite qu'elle lui demande une confirmation de paiement pour toutes les transactions d'un montant supérieur ou égal à 100 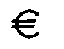 , sauf si elles émanent de certains commerçants 21 de son choix. Il peut aussi indiquer à la banque 22 qu'il souhaite mettre en oeuvre le mécanisme de confirmation pour toutes les transactions faisant intervenir un commerçant d'une zone géographique donnée (par exemple pour toutes les transactions effectuées à l'étranger), quel qu'en soit le montant.

Il est à noter que le montant de 100 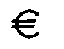 indiqué à titre d'exemple ci-dessus, constitue un seuil au-delà duquel la requête SIP initiale est systématiquement envoyée. Cependant, ce seul seuil ne suffit pas à sécuriser les transactions effectuées par le client, qui peut être victime d'une pluralité de petits débits frauduleux, d'un montant inférieur à ce seuil. On notera qu'il est alors important, dans un objectif de sécurisation optimale, de définir une pluralité de critères déclenchant l'émission d'une requête SIP.

On prévoit alors que le proxy 24 présente une interface de configuration permettant au client 20 d'accéder à et de modifier s'il le désire les paramètres ou les informations associés à son profil dans la table de configuration.

Le client 20 peut également indiquer à la société qui gère le proxy 24 un ou plusieurs critères déclenchant une requête de validation explicite plutôt qu'implicite. Lorsqu'une transaction vérifie ce ou ces critères, le proxy 24 demande alors systématiquement confirmation au client, par le biais d'un terminal détenu par ce dernier. Un seul site doit alors être mis à jour lorsque le client souhaite modifier les critères associés à son profil, contrairement à la variante de réalisation précédemment exposée, dans laquelle le client doit notifier le changement de ses critères à toutes les banques servant les demandes de cartes bancaires de par le monde.

Une société tierce peut opérer le proxy 24, qui est un point central par client, et qui est donc facile à gérer.

## Revendications

1. Procédé de sécurisation d'un paiement d'un client à un commerçant, comprenant une étape de transmission vers un centre de gestion, selon un premier protocole prédéfini, d'une requête de paiement comprenant au moins un identifiant dudit client,
**caractérisé en ce qu'**il comprend une étape de validation selon laquelle :
- ledit centre de gestion génère une requête de validation, à l'attention dudit client, selon un second protocole indépendant dudit premier protocole, à une adresse spécifiée par ledit client ;
- on effectue une transmission au nom dudit client d'un message de validation ou de refus du paiement, selon ledit second protocole.

2. Procédé de sécurisation selon la revendication 1, **caractérisé en ce que** ledit client est équipé d'un terminal comprenant des moyens de radio-communication.

3. Procédé de sécurisation selon la revendication 1 ou 2, **caractérisé en ce que** ledit second protocole est le protocole SIP.

4. Procédé de sécurisation selon la revendication 3, **caractérisé en ce que** ladite requête de validation est générée sous la forme d'un message "INVITE".

5. Procédé de sécurisation selon l'une quelconque des revendications 1 à 4,
**caractérisé en ce qu'**il comprend les étapes suivantes :
(a) réception, par ledit centre de gestion, d'une requête de paiement émise par ledit commerçant ;
(b) transmission d'une requête de validation, dudit centre de gestion vers un serveur de localisation ;
(c) identification d'un serveur proxy, auprès duquel ledit client est enregistré, par ledit serveur de localisation ;
(d) transmission de ladite requête de validation vers ledit serveur proxy ;
(e) transmission par ledit serveur proxy de ladite réponse audit centre de gestion.

6. Procédé de sécurisation selon la revendication 5, **caractérisé en ce qu'**il comprend en outre, à l'issue de ladite étape de transmission de ladite requête de validation vers ledit serveur proxy, les étapes suivantes :
(d_{bis}) transmission par ledit serveur proxy de ladite requête de validation vers ledit client équipé d'un terminal ;
(dₜₑᵣ) transmission par ledit client équipé d'un terminal d'une réponse à ladite requête de validation, vers ledit serveur proxy ;
de façon que ledit serveur proxy transmette ladite réponse audit centre de gestion.

7. Procédé de sécurisation selon la revendication 6, **caractérisé en ce que**, lorsque le client est équipé d'un terminal, lesdites étapes (d_{bis}) et (dₜₑᵣ) mettent en oeuvre une transmission utilisant au moins une des techniques appartenant au groupe comprenant :
- les messages courts (SMS) ;
- les communications téléphoniques ;
- les messages électroniques.

8. Procédé de sécurisation selon l'une quelconque des revendications 1 à 7,
**caractérisé en ce que** ledit centre de gestion et/ou ledit serveur proxy met en oeuvre une procédure de requête de validation uniquement dans des cas prédéterminés.

9. Procédé de sécurisation selon la revendication 8, **caractérisé en ce que** lesdits cas particuliers sont fonction d'au moins un des paramètres suivants :
- montant de la transaction ;
- type de client ;
- type de commerçant ;
- type de serveur proxy.

10. Procédé de sécurisation selon l'une quelconque des revendications 8 et 9,
**caractérisé en ce qu'**au moins un des paramètres desdits cas prédéterminés sont configurables par au moins un des intervenants suivants :
- le client ;
- le commerçant ;
- le centre de gestion ;
- le serveur proxy.

11. Procédé de sécurisation selon l'une quelconque des revendications 1 à 10,
**caractérisé en ce qu'**une réponse à une requête de validation peut-être de trois types :
- réponse positive ;
- réponse négative ;
- absence de réponse.

12. Procédé de sécurisation selon la revendication 11, **caractérisé en ce qu'**une absence de réponse est interprétée par ledit serveur proxy et/ou par ledit centre de gestion comme une réponse négative.

13. Procédé de sécurisation selon l'une quelconque des revendications 1 à 12,
**caractérisé en ce que** ledit centre de gestion n'effectue l'ensemble du traitement bancaire relatif audit paiement qu'après réception d'une réponse positive à ladite requête de validation.

14. Procédé de sécurisation selon l'une quelconque des revendications 1 à 13,
**caractérisé en ce que** ledit paiement est effectué à l'aide d'une carte bancaire.

15. Centre de localisation d'au moins un client, mettant en oeuvre le procédé selon l'une quelconque des revendications 1 à 14.

16. Système de sécurisation de paiements entre une pluralité de clients et une pluralité de commerçants, **caractérisé en ce qu'**il met en oeuvre un serveur de localisation et/ou un serveur proxy, capable de recevoir des requêtes de validation d'au moins un centre de gestion auprès duquel un paiement a été requis, de transmettre lesdites requêtes de validation vers des terminaux détenus respectivement par chacun desdits clients, et de recevoir et de faire suivre une réponse à ladite requête de validation, émise par ledit client à l'aide de son terminal.
